(19) Europäisches Patentamt / European Patent Office / Office européen des brevets

(11) **EP 3 096 169 B1**

(12) **FASCICULE DE BREVET EUROPEEN**

(45) Date de publication et mention de la délivrance du brevet:
**06.10.2021 Bulletin 2021/40**

(51) Int Cl.:
***G02B 17/06*** *(2006.01)*

(21) Numéro de dépôt: **16169292.6**

(22) Date de dépôt: **12.05.2016**

(54) **TELESCOPE COMPACT ANASTIGMAT A TROIS MIROIRS DE TYPE KORSCH**

DREISPIEGELIGES ANASTIGMATISCHES KOMPAKTTELESKOP VOM TYP KORSCH

COMPACT KORSCH-TYPE THREE-MIRROR ANASTIGMAT TELESCOPE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **22.05.2015 FR 1501064**

(43) Date de publication de la demande:
**23.11.2016 Bulletin 2016/47**

(73) Titulaire: **THALES**
**92400 Courbevoie (FR)**

(72) Inventeurs:
• **TETAZ, Nicolas**
  **06156 Cannes La Bocca Cedex (FR)**
• **VIARD, Thierry**
  **06156 Cannes La Bocca Cedex (FR)**

(74) Mandataire: **Marks & Clerk France**
**Immeuble "Visium"**
**22, avenue Aristide Briand**
**94117 Arcueil Cedex (FR)**

(56) Documents cités:
**US-A- 3 674 334     US-A1- 2005 013 021**
**US-A1- 2014 124 657**

• **KYLE H. FUERSCHBACH ET AL: "A new generation of optical systems with phi-polynomial surfaces", SPIE, PO BOX 10 BELLINGHAM WA 98227-0010, USA, vol. 7652, 1 janvier 2010 (2010-01-01), - 31 décembre 2010 (2010-12-31), XP040541196,**
• **None**

**Description**

Le domaine de l'invention est celui des télescopes et plus particulièrement des télescopes d'observations embarqués dans des satellites. Plus précisément, le domaine de l'invention concerne les systèmes catoptriques à grandes focales.

Il existe deux formes de champ angulaire selon le type de récepteur associé au télescope. Pour les récepteurs linéaires, le champ angulaire vaut quelques degrés dans une première direction de l'espace et quelques dixièmes de degrés dans la direction perpendiculaire. Pour les récepteurs matriciels, le champ angulaire vaut quelques degrés dans les deux directions de l'espace.

L'architecture optique de ce type de télescope comporte uniquement des miroirs classiquement hors d'axe. Ce type d'architecture permet de réaliser des télescopes compacts, ayant une très bonne transmission et totalement dénués d'aberrations chromatiques. La qualité d'image doit également être excellente dans tout le champ. Par conséquent, l'architecture optique doit être parfaitement corrigée des aberrations géométriques que sont l'aberration sphérique, la coma, la courbure de champ et l'astigmatisme.

Plusieurs solutions optiques ont été proposées pour réaliser de telles architectures.

Un premier type d'architecture optique de télescopes anastigmats comprend trois miroirs. Ces télescopes sont encore appelés « télescopes TMA » selon la terminologie anglo-saxonne signifiant « Three Mirrors Anastigmat ». Classiquement, les miroirs d'un télescope TMA ne sont pas inclinés ou « tiltés ». Si les miroirs sont tous sur un axe optique commun, il existe une occultation centrale importante. Pour supprimer l'occultation centrale, on réalise soit un « off-axis » de champ et/ou « un off-axis » de pupille. En effet, on peut incliner les miroirs pour supprimer l'occultation centrale, mais cette solution apporte des aberrations géométriques d'astigmatisme et de coma d'excentrement qui ne sont généralement pas acceptables.

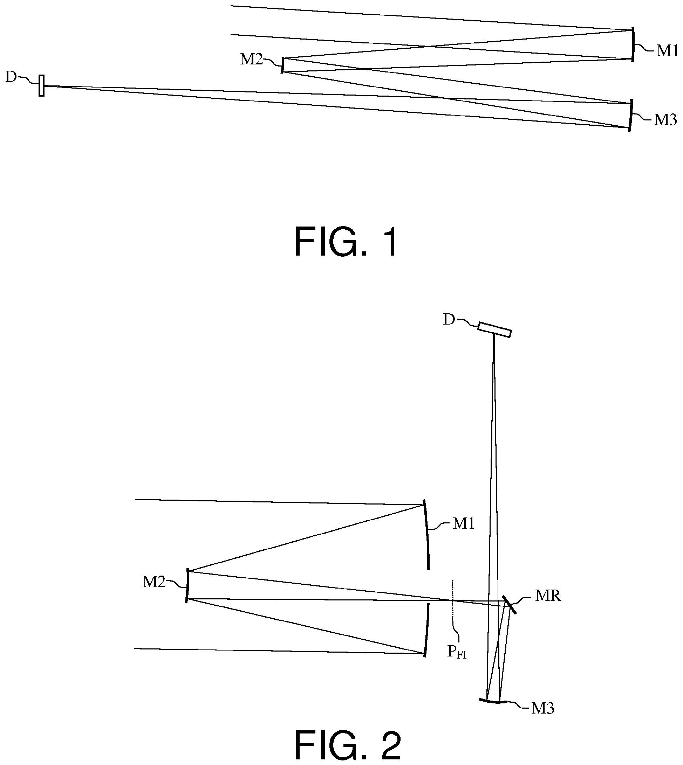

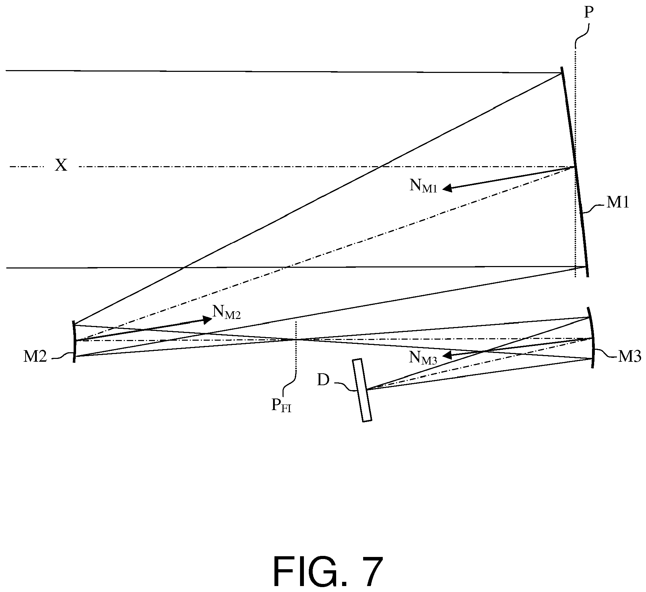

Il existe des télescopes TMA dont les miroirs sont légèrement tiltés et/ou excentrés. Généralement, l'inclinaison du miroir ne dépasse pas 1 ou 2 degrés. Cette solution optique permet de réduire à la marge l'off-axis de champ et/ou de pupille nécessaires, mais pas de les supprimer totalement. Un exemple de ce type de télescope à trois miroirs est représenté en figure 1. Sur cette figure et les suivantes, on a adopté les conventions suivantes. Les figures sont des vues dans un plan de coupe. Les miroirs sont représentés par des arcs de cercle en traits gras. Le détecteur photosensible D du télescope est représenté par un rectangle. On a également représenté deux rayons lumineux représentatifs des rayons de bord de pupille pour le champ central. Ces rayons lumineux sont représentés par des traits fins. Sur les figures 2 et 7, les plans intermédiaires sont représentés par des traits en pointillés.

Dans le cas de la figure 1, les trois miroirs sont asphériques. Le premier miroir M1 est concave, le second miroir M2 est convexe et le troisième miroir M3 est concave.

Les télescopes TMA offrent des champs linéaires importants. Ainsi, le champ linéaire peut dépasser 15 degrés. Cependant, à focale donnée, leur encombrement est conséquent et devient prohibitif pour certaines applications, en particulier lorsque la pupille du télescope a un diamètre important ou lorsque la focale est importante.

Il existe également un second type d'architecture optique plus compacte que l'architecture précédente. Ces télescopes sont dits « Korsch ». Leur architecture représentée sur la figure 2 est une variante de l'architecture précédente. Les télescopes Korsch sont également une combinaison à trois miroirs asphériques M1, M2 et M3 de type concave-convexe-concave mais la combinaison optique possède un plan focal intermédiaire $P_{FI}$ entre le second miroir M2 et le troisième miroir M3. Le miroir MR de la figure 2 est un simple miroir plan de renvoi et n'intervient pas dans la combinaison optique. Malheureusement, leur champ est limité. Ainsi, le champ linéaire ne peut facilement dépasser 3 degrés.

A titre d'exemple, un télescope Korsch de focale 10 mètres ouvert à f/4 peut avoir un champ linéaire de 3°x0.5°. Dans ce cas, l'erreur quadratique moyenne sur la surface d'onde ou WFE RMS, acronyme signifiant « WaveFront Error Root Mean Square » ne dépasse $\lambda$/20 dans tout le champ du télescope.

Comme on l'a dit, les miroirs utilisés dans les combinaisons optiques des télescopes TMA ou Korsch sont des miroirs asphériques. Plus précisément, leur surface est définie par une conique et des termes asphériques de révolution. Or, ces surfaces ne sont pas parfaitement adaptées pour corriger les aberrations de systèmes optiques qui n'ont plus d'axe de symétrie comme les télescopes TMA ou Korsch. Les TMA classiques ont une symétrie de révolution. Cependant, on ne les utilise pas sur leur axe optique, mais dans le champ. Les TMA sont parfaitement corrigés des aberrations au centre du champ, sur l'axe optique, mais l'occultation rend ce point du champ inaccessible. Le champ du télescope est donc excentré.

Plus on s'éloigne du centre optique, plus la qualité image décroit car le système n'est plus parfaitement corrigé des aberrations. Ainsi, la WFE RMS du télescope Korsch précédent passe à $\lambda$/4 lorsque le champ linéaire passe de 3°x0.5° à 6°x0.5°. Cette erreur n'est plus compatible des performances exigées. C'est une première limitation.

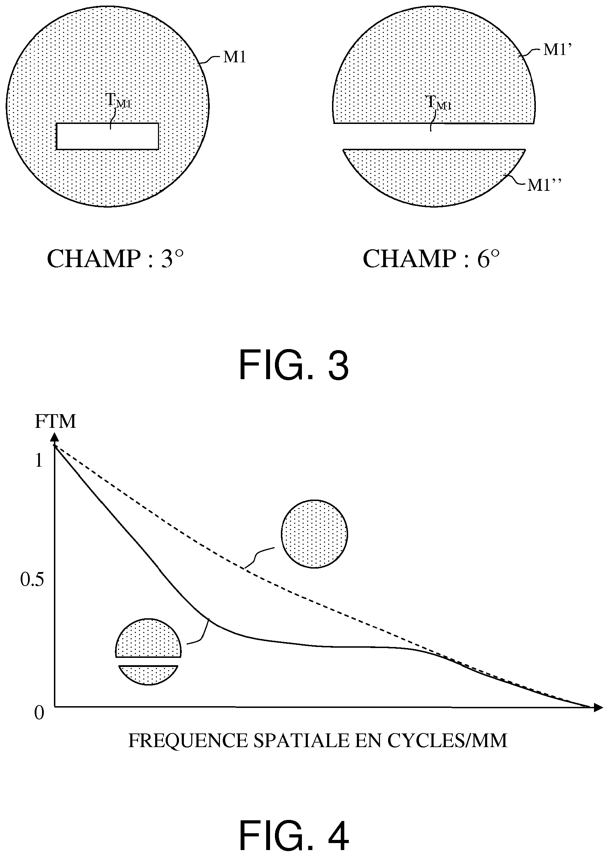

Par ailleurs, dans un Korsch classique, un trou doit être fait dans le premier miroir afin de laisser passer la lumière comme on le voit sur la figure 2. Le premier inconvénient lié à la présence de cette ouverture est une diminution de la surface utile du miroir primaire de l'ordre de 15 à 20%. Le second inconvénient est d'ordre mécanique. Pour un champ inférieur à 3°, la dimension du trou est acceptable, mais si le champ de vu est augmenté, la taille du trou devient importante et oblige à réaliser en deux parties distinctes le miroir M1, ce qui pose des problèmes mécaniques importants. Ce point est illustré sur la figure 3. A gauche de cette figure, on a représenté un miroir M1 avec une ouverture $T_{M1}$ suffisante pour laisser passer un champ de 3 degrés par 0.5 degrés. A droite de la figure 3, on a représenté un miroir en deux parties M1' et M1" séparées par l'ouverture $T_{M1}$, les deux parties étant nécessaires pour laisser passer un champ de 6 degrés par 0.5 degrés. Enfin, l'ouverture du miroir dégrade nécessairement la fonction de transfert de modulation ou FTM du télescope comme on le voit sur la figure 4 où sont représentées d'une part la FTM réelle du télescope avec son ouverture et la FTM théorique sans ouverture.

Depuis quelques années, un nouveau type de surface optique a été développé. Ces surfaces sont connues sous l'appellation « freeform » ou de forme libre. De façon générale, une optique freeform est une surface qui n'a pas de symétrie de révolution.

Il existe différentes définitions des surfaces freeform. Généralement, chaque définition répond à un besoin particulier, est adaptée à un mode de calcul et d'optimisation spécifique et bien entendu à un mode de réalisation propre.

A titres d'exemples, les définitions mathématiques d'une surface freeform peuvent être les suivantes :

- Surface freeform définie par des polynômes XY. En clair, cette surface étant définie dans un espace (x, y, z), si z(x, y) représente la coordonnée z d'un point de cette surface on a la relation :

$$z(x, y) = \frac{c(x^2 + y^2)}{1 + \sqrt{1 - (1 + k)c^2(x^2 + y^2)}} + \sum A_i x^j y^k$$

C étant la courbure de la surface, k étant la constante de conicité, $A_i$ étant des constantes, i, j et k étant des indices variant respectivement entre 0 et trois nombres entiers.

Cette surface correspond à une extension de la définition classique des surfaces asphériques en la généralisant à une surface sans symétrie de révolution ;

- Surface freeform définie par des phi-polynômes, par exemple les polynomes de Zernike ou de Q-Forbes. Les surfaces de Zernike sont les plus couramment utilisées. Une surface de Zernike est définie en coordonnées polaires dans un espace (ρ, φ, z), si z(p, φ) représente la coordonnée z d'un point de cette surface, on a la relation :

$$z(\rho, \varphi) = \frac{c(\rho^2)}{1 + \sqrt{1 - (1 + k)c^2 \rho^2}} + \sum C_j Z_j$$

$Z_j$ étant un polynôme de Zernike d'ordre j et $C_j$ étant la constante associée à ce polynôme, j étant un indice variant respectivement entre 0 et un nombre entier.

La publication de G.W. Forbes intitulée « Characterizing the shape of freeform optics » 30.01.2012/Vol.20, N° 3/Optics Express 2483 décrit les surfaces définies par des phi-polynômes de Q-Forbes.

- Surface Freeform définie par des équations locales de sous-surfaces freeform de définition différente.
- Surface Freeform définie par des descriptions hybrides comme, par exemple, des surfaces mélangeant des surfaces phi-polynomiales et des surfaces dites « NURBS », acronyme signifiant « Non-Uniform Rational Basis Splines » ou surfaces « B-Splines Rationnelles Non Uniformes ».

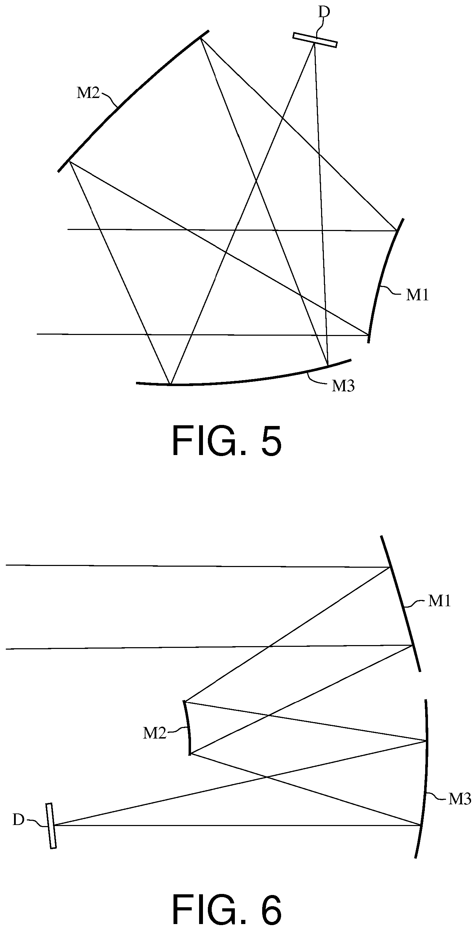

Ces surfaces freeform ont été utilisées pour la réalisation de télescopes à trois miroirs. Une première architecture de ce type est représentée en figure 5. L'architecture est une combinaison triangulaire à trois miroirs convexe - concave - concave dont au moins deux des trois miroirs sont des miroirs à surface freeform. On la trouve décrite dans plusieurs publications dont le brevet US 8 616 712 intitulé « Nonsymetric optical system and design method for nonsymetric optical system ». Cette solution optique permet d'atteindre des champs importants mais n'a pas la compacité requise.

Une seconde architecture de ce type est représentée en figure 6. L'architecture est également une combinaison à trois miroirs convexe - concave - concave dont au moins un des trois miroirs est un miroir freeform. On la trouve décrite dans plusieurs publications dont la demande de brevet US 2014/0124649 intitulée « Off-axial three-mirror system». Cette solution optique permet d'atteindre des champs importants mais, là encore, n'a pas la compacité requise lorsque la focale est de taille importante.

Le télescope selon l'invention comporte également un ou plusieurs miroirs de forme libre ou « freeform » de façon à mieux corriger les aberrations optiques que les miroirs asphériques. Ce gain en qualité est utilisé de façon à augmenter le champ des télescopes de type Korsch tout en conservant un encombrement réduit. Plus précisément, l'invention a pour objet un télescope anastigmat à trois miroirs selon la revendication 1.

L'invention concerne également un procédé de mise en place d'un télescope selon la revendication 7.

Des modes de réalisation additionnels sont définis dans les revendications dépendantes.

L'invention sera mieux comprise et d'autres avantages apparaîtront à la lecture de la description qui va suivre donnée à titre non limitatif et grâce aux figures annexées parmi lesquelles :

La figure 1 représente une première architecture optique de télescopes anastigmats à trois miroirs dits « télescopes TMA » selon l'art antérieur ;

La figure 2 représente une seconde architecture optique de télescopes anastigmats à trois miroirs dits « télescopes Korsch » selon l'art antérieur ;

La figure 3 représente une vue de face d'un miroir primaire de télescope Korsch avec son ouverture centrale dans deux configurations de champ différentes ;

La figure 4 représente la fonction de transfert de modulation du télescope Korsch à ouverture centrale ;

La figure 5 représente une troisième architecture optique de télescopes anastigmats à trois miroirs comportant un miroir freeform selon l'art antérieur ;

La figure 6 représente une quatrième architecture optique de télescopes anastigmats à trois miroirs comportant un miroir freeform selon l'art antérieur ;

La figure 7 représente une architecture optique de télescopes anastigmats à trois miroirs selon l'invention.

A titre d'exemple, la figure 7 représente une architecture optique de télescopes anastigmats à trois miroirs selon l'invention. Cette architecture comporte un premier miroir M1 concave, un second miroir M2 convexe et un troisième miroir M3 concave. Sur cette figure, l'axe optique X passant par le centre de la pupille P est représenté par des traits en pointillés et les normales $N_{M1}$, $N_{M2}$ et $N_{M3}$ à la surface des miroirs M1, M2 et M3 par des flèches disposées au centre des miroirs.

Cette architecture est dérivée des architectures de type Korsch telles que décrites précédemment. Mais, on démontre que l'utilisation de miroirs à surface freeform permet d'augmenter notablement le champ anastigmat accessible. Selon les architectures employées, le gain est sensiblement d'un facteur 2.

Les trois miroirs sont agencés de façon que le premier miroir et le second miroir forment d'un objet à l'infini, une image intermédiaire située dans un plan de focalisation $P_{FI}$ situé entre le second miroir et le troisième miroir. Le troisième miroir forme de cette image intermédiaire une image finale dans le plan focal du télescope où est situé le détecteur D.

Au moins, la surface du troisième miroir concave est une surface φ-polynomiale. Les surfaces du premier et du second miroir peuvent également être φ-polynomiale.

La pupille P du télescope est située au niveau du premier miroir M1 concave.

Comme on le voit sur la figure 7, la normale $N_{M1}$ au centre de la surface du premier miroir concave M1 est inclinée de quelques degrés sur l'axe optique X du télescope défini par le rayon passant par le centre de la pupille d'entrée et perpendiculaire à cette pupille, la normale $N_{M2}$ au centre de la surface du second miroir M2 convexe est inclinée de quelques degrés sur l'axe optique X du télescope et la normale $N_{M3}$ au centre de la surface du troisième miroir M3 concave est inclinée de quelques degrés sur l'axe optique X du télescope.

Cette configuration à trois miroirs comportant un plan focal intermédiaire, une pupille située au niveau du premier miroir et des miroirs à surface φ-polynomiale faiblement inclinés sur l'axe permet d'obtenir à la fois un champ optique important, un système ouvert et un encombrement plus réduit que les solutions de l'art antérieur.

Le procédé de calcul de la combinaison optique du télescope repose sur l'analyse des aberrations exprimées sous la forme de polynômes de Zernike dans le champ. Cette analyse permet de déterminer les valeurs des coefficients de Zernike à appliquer sur les différents miroirs M1, M2 et M3.

La méthode utilisée repose sur la théorie des aberrations nodales, connue sous la terminologie « Nodal Aberration Theory » généralisée aux surfaces freeform. Cette méthode est décrite dans « Theory of aberration fields for general optical systems with freeform surfaces » de K. Fuerschbach. Elle est mise en place au moyen d'un logiciel de calcul des combinaisons optiques.

Dans une première étape, on détermine les paramètres paraxiaux du télescope, c'est-à-dire sa focale, son ouverture et son champ.

Dans une seconde étape, la combinaison optique du télescope est mise en place dans une configuration de type Korsch avec trois miroirs simplement asphériques. Dans cette seconde étape, on ne prend pas en compte d'éventuelles occultations dues aux différents miroirs. On détermine alors les principales aberrations dans le champ par la théorie des aberrations nodales, c'est-à-dire les aberrations d'astigmatisme, de coma et d'aberration sphérique ainsi que la WFE RMS dans le champ du Korsch à trois miroirs asphériques.

Dans une troisième étape, on ajoute à au moins la surface d'un des miroirs de la combinaison optique des coefficients de Zernike correspondant aux aberrations calculées de façon à les diminuer et/ou les supprimer dans tout le champ du télescope. La solution optique trouvée reste théorique car la lumière est en partie bloquée par les miroirs.

Enfin, dans une quatrième et dernière étape, on supprime cette obturation par une rotation des miroirs. Ces rotations permettent à l'optique de continuer à travailler sur l'axe optique. Cependant, ce tilt apporte de l'astigmatisme et de la coma. Pour corriger les aberrations apportées, on modifie la forme du ou des miroirs freeform. En se basant sur la théorie des aberrations nodales, il est possible de corriger les aberrations créées par les rotations des miroirs, en modifiant directement les polynômes de Zernike appliqués sur chacun des trois miroirs. L'influence des polynômes de Zernike sur les miroirs est différente suivant la position du miroir par rapport à la pupille. Ainsi les polynômes de Zernike appliqués à un miroir disposé dans la pupille ou au voisinage de la pupille tel que le miroir M1 de la figure 5 ont une influence sur tous les points du champ, ce qui n'est pas le cas pour le miroir M3 qui se situe loin d'une pupille.

Bien entendu, la troisième et la quatrième étape peuvent être réalisées simultanément.

Dans un télescope selon l'invention, le champ linéaire angulaire peut être supérieur à 6 degrés dans une direction de l'espace ou le champ angulaire peut être supérieur à 2.5 degrés dans deux directions perpendiculaires de l'espace. L'ouverture pupillaire est comprise entre 7 et 25.

D'autre part, l'absence d'ouverture dans le miroir primaire permet d'augmenter la surface utile de 15 à 20%, d'augmenter la fonction de transfert de modulation au niveau des fréquences moyennes et de simplifier la réalisation technique.

A titre d'exemple, un télescope Korsch de focale 10 mètres ouvert à f/4 peut avoir un champ linéaire de 6°x0.5°. Dans ce cas, l'erreur quadratique moyenne sur la surface d'onde ou WFE RMS, acronyme signifiant « WaveFront Error Root Mean Square » ne dépasse λ/24 dans tout le champ du télescope.

## Revendications

1. Télescope anastigmat à trois miroirs comportant un premier miroir (M1) concave, un second miroir (M2) convexe et un troisième miroir (M3) concave, les trois miroirs étant agencés de façon que le premier miroir et le second miroir forment d'un objet à l'infini une image intermédiaire située entre le second miroir et le troisième miroir, le troisième miroir formant de cette image intermédiaire une image finale dans le plan focal du télescope, la surface du troisième miroir (M3) concave étant une surface φ-polynomiale, **caractérisé en ce que** la pupille (P) du télescope est située au niveau du premier miroir concave.

2. Télescope anastigmat selon la revendication 1, **caractérisé en ce que** la surface du premier miroir (M1) concave est une surface φ-polynomiale.

3. Télescope anastigmat selon la revendication 1, **caractérisé en ce que** la surface du second miroir (M2) convexe est une surface φ-polynomiale.

4. Télescope anastigmat selon l'une des revendications précédentes, **caractérisé en ce que** le champ linéaire angulaire est supérieur à 6 degrés dans une direction de l'espace.

5. Télescope anastigmat selon l'une des revendications précédentes, **caractérisé en ce que** le champ angulaire est supérieur à 2.5 degrés dans deux directions perpendiculaires de l'espace.

6. Télescope anastigmat selon l'une des revendications précédentes, **caractérisé en ce que** l'ouverture du télescope est comprise entre 7 et 25.

7. Procédé de mise en place d'un télescope anastigmat à trois miroirs comportant un premier miroir (M1) concave, un second miroir (M2) convexe et un troisième miroir (M3) concave, les trois miroirs étant agencés de façon que le premier miroir et le second miroir forment d'un objet à l'infini une image intermédiaire située entre le second miroir et le troisième miroir, le troisième miroir formant de cette image intermédiaire une image finale dans le plan focal du télescope, **caractérisé en ce que** la pupille (P) du télescope est située au niveau du premier miroir concave, le procédé étant mis en œuvre par un logiciel de calcul de combinaisons optiques, **caractérisé de plus en ce que** le procédé comporte au moins les étapes suivantes :

   - Dans une première étape, détermination des paramètres paraxiaux du télescope ;
   - Dans une seconde étape, mise en place de la combinaison optique du télescope dans une configuration de type Korsch comportant les trois miroirs asphériques, détermination des principales aberrations dans le champ par la théorie des aberrations nodales et détermination de la WFE RMS correspondant ;

- Dans une troisième étape, ajout à la définition de la surface asphérique d'un des miroirs de la combinaison optique des coefficients de polynômes de Zernike correspondant aux aberrations calculées, ladite surface étant ainsi une surface freeform φ-polynomiale;

- Dans une quatrième étape, suppression de l'obturation du miroir primaire par une rotation d'au moins un des miroirs et modification de la forme du miroir à surface freeform, de façon de corriger les aberrations créées par la rotation du miroir et modification des polynômes de Zernike de façon à réduire la WFE RMS sous un seuil prédéterminé.

8. Procédé de mise en place d'un télescope anastigmat selon la revendication 7, **caractérisé en ce que** les modifications de définition de surface réalisées à la troisième étape ou à la quatrième étape concernent également la surface d'un des deux autres miroirs du télescope.

**Patentansprüche**

1. Anastigmatisches Teleskop mit drei Spiegeln, das einen konkaven ersten Spiegel (M1), einen konvexen zweiten Spiegel (M2) und einen konkaven dritten Spiegel (M3) aufweist, wobei die drei Spiegel so angeordnet sind, dass der erste Spiegel und der zweite Spiegel von einem Objekt unendlich ein Zwischenbild erzeugen, welches sich zwischen dem zweiten Spiegel und dem dritten Spiegel befindet, wobei der dritte Spiegel aus diesem Zwischenbild ein endgültiges Bild in der Brennebene des Teleskops erzeugt, wobei die Oberfläche des konkaven dritten Spiegels (M3) eine φ-polynomische Fläche ist, **dadurch gekennzeichnet, dass** die Pupille (P) des Teleskops sich auf Höhe des konkaven ersten Spiegels befindet.

2. Anastigmatisches Teleskop nach Anspruch 1, **dadurch gekennzeichnet, dass** die Oberfläche des konkaven ersten Spiegels (M1) eine φ-polynomische Fläche ist.

3. Anastigmatisches Teleskop nach Anspruch 1, **dadurch gekennzeichnet, dass** die Oberfläche des konvexen zweiten Spiegels (M2) eine φ-polynomische Fläche ist.

4. Anastigmatisches Teleskop nach einem der vorhergehenden Ansprüche, **dadurch gekennzeichnet, dass** das lineare Winkelfeld über 6 Grad in einer Richtung des Raums beträgt.

5. Anastigmatisches Teleskop nach einem der vorhergehenden Ansprüche, **dadurch gekennzeichnet, dass** das Winkelfeld über 2,5 Grad in zwei rechtwinkligen Richtungen des Raums beträgt.

6. Anastigmatisches Teleskop nach einem der vorhergehenden Ansprüche, **dadurch gekennzeichnet, dass** die Öffnung des Teleskops zwischen 7 und 25 beträgt.

7. Verfahren zur Einrichtung eines anastigmatischen Teleskops mit drei Spiegeln, das einen konkaven ersten Spiegel (M1), einen konvexen zweiten Spiegel (M2) und einen konkaven dritten Spiegel (M3) aufweist, wobei die drei Spiegel so angeordnet sind, dass der erste Spiegel und der zweite Spiegel von einem Objekt unendlich ein Zwischenbild erzeugen, welches sich zwischen dem zweiten Spiegel und dem dritten Spiegel befindet, wobei der dritte Spiegel aus diesem Zwischenbild ein endgültiges Bild in der Brennebene des Teleskops erzeugt,

dadurch gekennzeichnet, dass die Pupille (P) des Teleskops sich auf Höhe des konkaven ersten Spiegels befindet,
wobei das Verfahren durch ein Programm zur Berechnung optischer Kombinationen umgesetzt wird, ferner **dadurch gekennzeichnet, dass** das Verfahren mindestens folgende Schritte umfasst:

- in einem ersten Schritt, Bestimmen der paraxialen Parameter des Teleskops;
- in einem zweiten Schritt, Einrichten der optischen Kombination des Teleskops in einer Konfiguration vom Typ Korsch, umfassend die drei asphärischen Spiegel, Bestimmen der Hauptaberrationen in dem Feld anhand der Theorie der nodalen Aberrationen und Bestimmen der entsprechenden RMS-WFE;
- in einem dritten Schritt, Hinzufügen zu der Definition der asphärischen Oberfläche eines der Spiegel der optischen Kombination von Koeffizienten von Zernike-Polynomen, welche den berechneten Aberrationen entsprechen, wobei die Oberfläche dadurch eine φ-polynomische Freiformfläche ist;

- in einem vierten Schritt, Entfernen des Verschlusses des Primärspiegels durch eine Rotation mindestens eines der Spiegel und Modifizieren der Form des Spiegels mit Freiformfläche, um die durch die Rotation des Spiegels und Modifizierung der Zernike-Polynome verursachten Aberrationen dergestalt zu korrigieren, dass die RMS-WFE unter einen vorbestimmten Schwellenwert gesenkt wird.

8. Verfahren zur Einrichtung eines anastigmatischen Teleskops nach Anspruch 7, **dadurch gekennzeichnet, dass** die Modifizierungen der Oberflächendefinition, welche im dritten Schritt oder im vierten Schritt ausgeführt werden, ebenfalls die Oberfläche eines der beiden anderen Spiegel des Teleskops betreffen.

**Claims**

1. Three-mirror anastigmat telescope comprising a concave first mirror (M1), a convex second mirror (M2) and a concave third mirror (M3), the three mirrors being arranged so that the first mirror and the second mirror form, from an object at infinity, an intermediate image situated between the second mirror and the third mirror, the third mirror forming, from this intermediate image, a final image in the focal plane of the telescope, the surface of the concave third mirror (M3) being a $\varphi$-polynomial surface **characterized in that** the pupil (P) of the telescope is situated at the level of the first concave mirror.

2. Anastigmat telescope according to claim 1, **characterized in that** the surface of the concave first mirror (M1) is a $\varphi$-polynomial surface.

3. Anastigmat telescope according to claim 1, **characterized in that** the surface of the convex second mirror (M2) is a $\varphi$-polynomial surface.

4. Anastigmat telescope according to one of the preceding claims, **characterized in that** the angular linear field is greater than 6 degrees in a direction of space.

5. Anastigmat telescope according to one of the preceding claims, **characterized in that** the angular field is greater than 2.5 degrees in two perpendicular directions of the space.

6. Anastigmat telescope according to one of the preceding claims, **characterized in that** the opening of the telescope is comprised between 7 and 25.

7. Method for installing a three-mirror anastigmat telescope having a concave first mirror (M1), a convex second mirror (M2) and a concave third mirror (M3), the three mirrors being arranged so that the first mirror and the second mirror form, from an object at infinity, an intermediate image situated between the second mirror and the third mirror, the third mirror forming from this intermediate image a final image in the focal plane of the telescope,

    **characterized in that** the pupil (P) of the telescope is situated at the level of the first concave mirror, the process being implemented by an optical combination computation software, further **characterized in that** the method comprises at least the following steps:

        - in a first step, determination of the paraxial parameters of the telescope;
        - in a second step, installation of the optical combination of the telescope in a Korsch-type configuration comprising the three aspherical mirrors, determination of the main field aberrations by the nodal aberration theory and determination of the corresponding RMS WFE;
        - in a third step, addition, to the definition of the aspherical surface of one of the mirrors of the optical combination, of the Zernike polynomial coefficients corresponding to the computed aberrations, said surface thus being a $\varphi$-polynomial freeform surface;
        - in a fourth step, elimination of the occluding of the primary mirror by a rotation of at least one of the mirrors and modification of the form of the mirror with freeform surface, so as to correct the aberrations created by the rotation of the mirror and modification of the Zernike polynomials so as to reduce the RMS WFE below a predetermined threshold.

8. Method for installing an anastigmat telescope according to claim 7, **characterized in that** the surface definition modifications made in the third step or in the fourth step also affect the surface of one of the other two mirrors of the telescope.

# FIG. 1

# FIG. 2

CHAMP : 3°          CHAMP : 6°

# FIG. 3

FREQUENCE SPATIALE EN CYCLES/MM

# FIG. 4

FIG. 5

FIG. 6

FIG. 7

## RÉFÉRENCES CITÉES DANS LA DESCRIPTION

**Documents brevets cités dans la description**

- US 8616712 B

- US 20140124649 A

**Littérature non-brevet citée dans la description**

- **G.W. FORBES.** Characterizing the shape of freeform optics. Optics Express, 30 Janvier 2012, vol. 20, 2483